(19) Europäisches Patentamt
European Patent Office
Office européen des brevets

(11) **EP 0 867 087 B1**

(12) **EUROPÄISCHE PATENTSCHRIFT**

(45) Veröffentlichungstag und Bekanntmachung des Hinweises auf die Patenterteilung:
**17.10.2001   Patentblatt 2001/42**

(21) Anmeldenummer: **97925022.2**

(22) Anmeldetag: **30.05.1997**

(51) Int Cl.[7]: **H04N 5/74**

(86) Internationale Anmeldenummer:
**PCT/EP97/02813**

(87) Internationale Veröffentlichungsnummer:
**WO 98/05161 (05.02.1998 Gazette 1998/05)**

(54) **VIDEOPROJEKTIONSGERÄT UND VERFAHREN ZUM DARSTELLEN EINES AUS BILDPUNKTEN DEFINIERTER GRÖSSE AUFGEBAUTEN VIDEOBILDES**

VIDEO PROJECTION APPARATUS AND METHOD OF DISPLAYING A VIDEO IMAGE COMPOSED OF PIXELS OF A DEFINED SIZE

APPAREIL DE PROJECTION VIDEO ET PROCEDE POUR REPRESENTER UNE IMAGE VIDEO COMPOSEE DE POINTS D'IMAGE DE DIMENSION DEFINIE

(84) Benannte Vertragsstaaten:
**AT CH DE ES FI FR GB IT LI NL**

(30) Priorität: **19.07.1996   DE 19629279**

(43) Veröffentlichungstag der Anmeldung:
**30.09.1998   Patentblatt 1998/40**

(73) Patentinhaber: **Schneider Laser Technologies Aktiengesellschaft**
**07548 Gera (DE)**

(72) Erfinder: **DETER, Christhard**
**D-07546 Gera (DE)**

(74) Vertreter: **Geyer, Werner, Dr.-Ing. et al**
**Patentanwälte**
**Geyer, Fehners & Partner**
**Perhamerstrasse 31**
**80687 München (DE)**

(56) Entgegenhaltungen:
**DE-A- 4 432 029**

• **"LASER-BASED TV UNDER DEVELOPMENT PROMISES SHARPER AND HIGHER-RESOLUTION IMAGES" 13.Oktober 1995 , ELECTRONIC DESIGN, VOL. 43, NR. 21, PAGE(S) 37/38 XP000551878 siehe das ganze Dokument**
• **PATENT ABSTRACTS OF JAPAN vol. 014, no. 409 (P-1101), 5.September 1990 & JP 02 157790 A (HITACHI LTD), 18.Juni 1990,**

**Beschreibung**

Die Erfindung bezieht sich auf ein Videoprojektionsgerät zum Darstellen eines aus Bildpunkten durch Bildgröße und Videonorm definierter Größe aufgebauten Videobildes auf einem Schirm mit mindestens einer Lichtquelle zum Aussenden eines Lichtbündels mit vorgegebenem Strahlprofil zur Beleuchtung von jedem Bildpunkt auf dem Schirm während eines durch dire Videonorm vorgegebenen Zeitintervalls. Weiter bezieht sich die Erfindung auf ein Verfahren, bei dem ein Videobild auf einem Schirm aus Bildpunkten durch Bilgröße Videonorm definierter Größe aufgebaut wird, indem ein Lichtbündel mit vorgegebenem Strahlprofil zur jeweiligen Beleuchtung der Bildpunkte während eines vorgegebenen Zeitintervalls auf einen Schirm gerichtet wird.

Die Video- beziehungsweise Fernsehtechnik hat seit ihrer Erfindung in beeindruckender Weise einen beträchtlichen Markt erobert. Im Zeitraum von einem Jahr werden weltweit etwa 60 Millionen TV-Geräte hergestellt.

Bei neueren Entwicklungen wurde im wesentlichen die Bildqualität verbessert. Dies betrifft sowohl die Bildschärfe als auch den Kontrast sowie die Farbbrilianz.

Für die Bildschärfe ist vor allem das Bildwiedergabeelement ausschlaggebend. Bei der TV-Bildröhre benutzt man zur scharfen Begrenzung der einzelnen Bildpixel sogenannte Schlitz-oder Lochmasken. Diese Masken erfüllen erstens für eine Farbdarstellung die Aufgabe, die den eingesetzten drei Elektronenstrahlen zugänglichen Bereiche für die Phosphore auf den Bildschirm zur Erzeugung des roten, grünen sowie blauen Lichts zu trennen. Zweitens ist durch die Schlitzmasken auch eine scharfe Begrenzung der Bildpunkte beim Aufbau eines Videobilds gegeben. Beim Betrachten einer TV-Bildröhre aus kürzestem Abstand kann eine Pixelstruktur, die durch die Lokalisierung der Bildpunkte (Pixel) gegeben ist, vom menschlichen Auge erfaßt werden.

Neben der TV-Bildröhre gibt es weitere Verfahren zur Darstellung eines Videobildes. Einige dieser Verfahren wenden die Projektion eines geräteinternen primären Bildes an. Dabei erfolgt mittels eines Projektionsobjektivs eine Vergrößerung des primären Bildes auf einem Schirm.

Das wohl am weitesten verbreitete Gerät dieser Art ist der LCD-Projektor. Das zu projizierende primäre Bild wird mit Hilfe einer Flüssigkristallmatrix (LCD-Matrix) gebildet. Diese gibt eine feste Anzahl von Bildpunkten vor, wobei für jeden Bildpunkt ein LCD-Element vorgesehen ist. Die Untergliederung der LCD-Matrix in einzelne LCD-Elemente ist auf dem Projektionsschirm insbesondere wegen der Außenkontur der einzelnen LCD-Elemente deutlich erkennbar.

Die Pixelstruktur ist bei einem Videoprojektionsgerät ebenfalls bei einer Vorrichtung gemäß einem Vorschlag von Texas Instruments mit kippbaren Spiegeln für die Beleuchtung von Bildpunkten durch die Kanten der einzelnen Spiegel deutlich erkennbar.

Bei einer Bildprojektion mit sogenannten "Beamern" erfolgt eine Projektion der Frontfläche einer TV-Bildröhre auf einen Projektionsschirm. Auch hier sind die einzelnen Bildpunkte aufgrund der Abbildung der Maskenstruktur der einzelnen Bildröhren begrenzt.

Die Anzahl der einzelnen Bildelemente, die für die Darstellung von Bildpunkten zum Aufbau eines Videobildes zur Verfügung stehen, wird bei allen oben genannten Verfahren durch den Aufbau der entsprechenden Bildwiedergabesysteme bestimmt. Daher sind diese Systeme im allgemeinen nur für eine einzige TV-Norm geeignet. So verfügt zum Beispiel eine PAL-TV-Bildröhre über 625x830 Bildelemente, die zur Darstellung der Bildpunkte eines Videosystems ausgenutzt werden.

Bei der PAL-Darstellung mit Flüssigkristallmatrizen bedarf es der gleichen Anzahl von LCD-Elementen, ähnlich wie auch das genannte Spiegelsystem gleich viele Spiegel aufweisen muß.

Daher ist allen diesen Systemen ein Nachteil inhärent. Bei Ausfall eines einzigen Bildelements nimmt die Bildqualität deutlich ab. Wegen der genannten großen Anzahl von Bildelementen zur Darstellung der Bildpunkte ist die Wahrscheinlichkeit für den Ausfall eines einzelnen Bildelementes sehr hoch anzusetzen.

Dieses Problem wird insbesondere bei der Verbesserung der Bildqualität über eine erhöhte Anzahl von Bildpunkten, wie sie beispielsweise bei der HDTV-Norm angestrebt ist, bei der immerhin ungefähr 3 Millionen Bildelemente notwendig sind, noch relevanter. Vor allem bei der genannten Matrix mit Kippspiegeln von Texas Instruments wirkt sich die hohe Ausfallwahrscheinlichkeit nachteilig aus. Die Geräteentwicklung führte bisher noch zu keinem marktfähigen Videogerät, da die Ausschußquote für kommerzielle Anwendungen viel zu hoch ist.

Weiter ergibt sich bei den genannten Techniken der Nachteil, daß Videobilder nur in einer einzigen Norm darstellbar sind. Änderungen im darstellbaren Bildformat sind nicht möglich, da beispielsweise auch die Seitenverhältnisse durch die festgesetzte Norm bestimmt sind.

Die Abmessung eines Bildelementes kann in einfacher Weise aus dem Bildformat und der entsprechenden Bildelementzahl bestimmt werden. Diese Größen variieren zwischen unterschiedlichen Normen. Damit ist eine multivalente Anwendung unterschiedlicher Normen und Systeme ausgeschlossen.

Diese Nachteile sind beim gattungsgemäßen Stand der Technik behoben. Derartige Systeme sind beispielsweise aus der DE 43 06 797 C1 bekannt. Gemäß dieser Druckschrift wird ein Lichtbündel rasternd auf einen Schirm abgelenkt, wobei die Lichtintensität beziehungsweisefarbe des abgelenkten Lichtbündels ähnlich wie beim abgelenkten Elektronenstrahl in einer Bildröhre zur Ansteuerung eines Bildpunktes moduliert wird.

Aufgrund des Rasterns wird jeder Bildpunkt nur innerhalb eines kurzen Zeitintervalls in Bruchteilen von Mikrosekunden vom Lichtbündel beleuchtet. Das Bild entsteht prinzipiell erst im Auge eines Beobachters, das aufgrund seiner Trägheit die empfangene Lichtinformation über einen Zeitraum größer als 1/100 sec mittelt.

Bei diesen Systemen existiert kein geräteinternes Bild innerhalb eines Projektors. Mittels körperlicher Blenden abgegrenzte Bildelemente sind dabei prinzipiell nicht erforderlich.

Die Größe eines Bildpunktes ist im wesentlichen durch den Durchmesser des Lichtbündels zur Beleuchtung der einzelnen Bildpunkte bestimmt. Wegen der hohen Lichtparallelität werden deshalb für derartige Videoprojektionsgeräte im allgemeinen Laser eingesetzt. Prinzipiell könnte man jedoch auch LED's verwenden, die wesentlich billiger als Laser sind, es ist dann aber ein Aufwand für eine Optik zum Parallelisieren und eine erhöhte Leistung zum Ausgleich von Lichtverlusten an Blenden und Kollimatoren zu berücksichtigen.

Für die Bestimmung eines von einem Laser beleuchteten Flecks gibt es fest definierte Größen. Da das Intensitätsprofil des Laserstrahls im allgemeinen mittels einer Gaußfunktion angenähert werden kann, also keine scharfe Begrenzung aufweist, wird der Durchmesser allgemein durch einen Intensitätsabfall auf $1/e^2$, bezogen auf das Intensitätsmaximum, definiert.

Zum Erreichen eines für die benötigte, aufgrund der Bildpunktgröße einer Norm geforderten Auflösung muß eine hohe Qualität der Ausbreitungsbedingungen des Laserstrahles gewahrt bleiben. Die Qualität kann verbessert werden, indem optische Systeme zur Strahlfokussierung eingesetzt werden. Dabei ergibt sich, daß der optische Aufwand zum Erreichen des erforderlichen Laserfokus mit den Anforderungen an die Auflösung überproportional steigt.

Der Erfindung liegt die Aufgabe zugrunde, ein Videoprojektionssystem und ein Verfahren zu schaffen, bei dem ein verringerter Aufwand zur Darstellung eines Videobildes bezüglich einer definierten Bildpunktgröße für die das Lichtbündel erzeugenden Lichtquellen oder der optischen Systeme möglich ist.

Die Aufgabe wird ausgehend vom gattungsgemäßen Stand der Technik dadurch gelöst, daß das Strahlprofil des Lichtbündels weiter als die definierte Größe des jeweiligen zu beleuchtenden Bildpunktes ausgedehnt und das Zeitintervall so kurz gehalten ist, daß die Größe eines Bildpunktes im Auge von einem das Videobild betrachtenden Beobachters erfaßten Bildpunktes übereinstimmend mit der durch Bildgröße und Videonorm definierten Größe des Bildpunktes wahrnehmbar ist.

Wie vorstehend schon ausgeführt wurde, würde man annehmen, daß das Lichtbündel die gleiche Größe auf dem Schirm haben müßte wie der zu beleuchtende Bildpunkt. Jedoch hat sich unerwarteterweise herausgestellt, daß aufgrund der zeitweisen Belichtung der Sehzellen im Auge eines Beobachters ein kurzzeitig erzeugter Lichtfleck auf einem Schirm als Lichtpunkt mit wesentlich geringerem Durchmesser wahrgenommen wird.

Dieses Ergebnis ist von vornherein unverständlich, hält man sich aber vor Augen, daß aufgrund des dargestellten Prinzips zur Beleuchtung eines einzelnen Bildpunktes bei einer Million Bildpunkte pro Bild die Lichtintensität im Auge ungefähr ein millionenmal größer ist als wenn jede Sehzelle statisch beleuchtet würde, erkennt man, daß die Sehzellen im Auge des Beobachters bei dieser Art der Bilderfassung gegenüber dem statischen Sehen in einem fehlangepaßten Bereich betrieben werden.

Dies würde allerdings noch nicht erklären, daß der Durchmesser eines Lichtbündels kleiner als in Wirklichkeit erscheint. Im Gegenteil würde man aufgrund einer elektrotechnischen Analogiebildung zum Verhalten üblicher Verstärker erwarten, daß die Sehzellen im Auge des Beobachters im wesentlichen übersteuert wären, wodurch der durch das Auge erfaßte Durchmesser wesentlich größer wäre als sich durch den $1/e^2$ Abfall der Lichtintensität ergeben würde. Ein solcher Schluß ist aber, wie experimentell festgestellt wurde, nicht richtig. Dies liegt möglicherweise daran, daß die Sehzellen ohne weiteres in der Lage sind, sich auf Intensitätsunterschiede in der Größenordnung von $10^4$ zu adaptieren, so daß physiologisch keine zu elektronischen lichtempfindlichen Bauelementen ähnliche Übersteuerung zu erwarten ist.

Allerdings ist das beobachtete Phänomen auch unter Zugrundelegung der erreichbaren Dynamik bei Sehzellen nicht ohne weiteres erklärbar. Bei der späteren Betrachtung von Ausführungsbeispielen werden allerdings zwei Modellbetrachtungen angegeben, die den geringeren visuell erfaßten Lichtfleckdurchmesser plausibel machen.

Unabhängig von einer Erklärung für dieses Phänomen erlaubt dieses jedoch, den Aufwand für gattungsgemäße Videoprojektionsgeräte für die Lösung des der Erfindung zugrunde liegenden Problems zu verringern. Versuche, die an einem Laserprojektionssystem durchgeführt wurden, zeigten, daß man bei üblichen Rastergeschwindigkeiten entsprechend der PAL-Norm bei der durch diese Norm definierten Bildpunktgröße und den bestimmten vorgegebenen Zeitintervall zur Beleuchtung jedes Bildpunktes Strahlprofile verwenden kann, deren Durchmesser definiert durch den $1/e^2$ Abfall vom Maximum der Intensität des Laserlichtbündels sogar viermal so groß wie der zur Normerfüllung erwartete, statisch erfaßbare Strahldurchmesser sein kann. Es ist aus dem vorher Gesagten evident, daß damit der optische Aufwand oder der für die Lichtquellen nötige Aufwand wesentlich geringer ist, als wenn man einen Fokus verwenden würde, der genau der Bildpunktgröße entspricht.

Das erkannte Phänomen läßt sich auch bei Vektorgraphiken ausnutzen. In vorteilhafter Weise nutzt man den Effekt jedoch bei möglichst gleichen Zeitintervallen pro Bildpunkt aus. Dafür sieht eine vorteilhafte Weiterbildung der Erfindung eine Rastereinrichtung zum zeilen-und bildmäßigen Rastern vor, mit der beim Rastem ein definierter Zeilenabstand eingehalten wird.

Die vorhergehend genannte Zahl vier wurde bei einem bestimmten Aufbau eines Videogerätes ermittelt. Wie aus den späteren Betrachtungen physiologischer Modellrechnungen deutlich wird, läßt sich der beobachtete Effekt sogar unter Verwendung wesentlich größerer Strahldurchmesser ausnutzen, denn dabei wird plausibel werden, daß man erwarten könnte, daß der Durchmesser des Bündels sogar bis zum Zehnfachen der gewünschten Bildpunktgröße betragen kann. Demgemäß ist eine vorteilhafte Weiterbildung der Erfindung dadurch gekennzeichnet, daß dem Strahlprofil eine in senkrechter Richtung zum zeilenmäßigen Rastern über einen $1/e^2$ Intensitätsabfall vom Maximum definierte Breite zugeordnet ist, die zwischen dem Ein- und Zehnfachen des definierten Zeilenabstands beträgt.

Bei dieser Weiterbildung wird ein zeilenmäßiges Rastern berücksichtigt und der Strahldurchmesser auf den Zeilenabstand bezogen. Der Zeilenabstand ist über die jeweils verwendete Norm wesentlich besser bestimmt als die Bildpunktgröße. Deshalb eignet sich auch die Angabe eines Zeilenabstands zur Definition des Strahldurchmessers. Die Weiterbildung trägt jedoch in vorteilhafter Weise dem Umstand Rechnung, daß der Strahldurchmesser bis zum Zehnfachen des Zeilenabstands betragen kann.

Jedoch gilt auch hier, daß der Laserfokus für eine hochqualitative Auflösung so gering wie möglich sein sollte. Deswegen sehen bevorzugte Weiterbildungen der Erfindung vor, daß die Breite des Strahlprofils zwischen dem Ein- und Fünffachen des Zeilenabstandes beträgt und insbesondere, daß das Verhältnis der Breite des Strahlprofils zum Zeilenabstand $4 \pm 1$ beträgt.

Wie vorstehend schon deutlich wurde, ist der zugrundeliegende Effekt, der die Erfindung ermöglicht, schwer zu verstehen. Anscheinend kommt der Effekt jedoch dadurch zustande, daß jeder Bildpunkt und dadurch indirekt jede Sehzelle, mit der das Videobild erfaßt wird, nur sehr kurzzeitig beleuchtet wird. Um den Effekt zu vergrößern, wird gemäß einer vorteilhaften Weiterbildung der Erfindung vorgeschlagen, daß die Lichtquelle gepulst ist und insbesondere ein gepulster Laser ist.

Die später dargestellten Überlegungen werden deutlich machen, daß der Effekt besonders dann gut zutage tritt, wenn die Pulsdauer kleiner als 1μs und insbesondere kleiner als 10 ps ist. Eine noch bessere Ausnutzung dieses Effekts erreicht man allerdings dann, wenn jeder Bildpunkt gemäß einer anderen bevorzugten Weiterbildung der Erfindung mit einer Pulsdauer kleiner als 1 ps beleuchtet wird.

Ein erfindungsgemäßes Verfahren ist ausgehend vom gattungsgemäßen Stand der Technik dadurch gekennzeichnet, daß bei dem Verfahren ein Lichtbündel mit einem Strahlprofil eingesetzt wird, das weiter als die durch die definierte Größe des jeweils zu beleuchtenden Bildpunktes ausgedehnt ist, und jeder Bildpunkt innerhalb eines so kurzen Zeitintervalls beleuchtet wird, daß die Größe des Bildpunktes im Auge von einem das Videobild betrachtenden Beobachter erfaßten Bildlpunktes übereinstimmend mit der durch Bildgröße und Videonorm definierten Größe dieses Bildpunktes wahrgenommen wird.

Auch bei dem Verfahren macht man sich das bei der Vorrichtung erkannte Verhalten des Auges des Beobachters zunutze. Der durch das Strahlbündel abgebildete Bildpunkt ist also wesentlich größer als der durch die jeweilige Norm gegebene darzustellende Bildpunkt.

Wegen der physiologischen Eigenschaften des Auges wird der größere Lichtfleck mit einem Durchmesser wahrgenommen, der der erforderlichen Bildpunktgröße entspricht.

Das erfindungsgemäße Verfahren und die Vorrichtung lassen sich nicht nur zur Darstellung von gerasterten Videobildern einsetzen. Es sind beispielsweise bei Showanwendungen auch Ablenkungen zur Darstellung von Vektorgraphiken bekannt. Dabei wird ein Lichtbündel für jedes Bild jeweils entlang einer darzustellenden Kurve geführt.

Beim erfindungsgemäßen Verfahren ist, wie vorstehend schon ausgeführt wurde, das Zeitverhalten wichtig. Deswegen ist bei der Vektorgraphik darauf zu achten, daß jedes Flächenelement im wesentlichen innerhalb gleicher Zeitintervalle beleuchtet wird. Wie bei Vektorgraphiken in Showanwendungen bekannt ist, können allerdings an Eckpunkten längere Zeiten pro Wegstrecke auftreten. Dies kann einen besonderen Reiz zur Darstellung in Showanwendungen geben. Will man das vermeiden, kann auch mit einer entsprechenden Elektronik dafür gesorgt werden, daß die kurzen Zeitintervalle zur Belichtung auch an Eckpunkten in Vektorgraphiken eingehalten werden.

Weniger aufwendig ist jedoch eine Bilddarstellung, bei der prinzipiell alle Bildpunkte gleichmäßig beleuchtet werden. Dementsprechend sieht eine bevorzugte Weiterbildung der Erfindung vor, daß das Lichtbündel zur Darstellung des Videobildes gerastert wird.

Wie vorstehend schon beschrieben wurde, kann man den hier zum Tragen kommenden physiologischen Effekt erhöhen, wenn die Zeitintervalle zur Darstellung von Bildpunkten verringert werden. Dies wird bei einer bevorzugten Weiterbildung der Erfindung dadurch erreicht, daß das Lichtbündel beim Beleuchten eines jeden Bildpunktes gepulst wird.

Die Erfindung wird nachfolgend anhand der Zeichnungen und einer Modellrechnung beispielshalber noch näher erläutert. Es zeigen:

Fig. 1:    Schematische Darstellung eines Ausführungsbeispiels;

Fig. 2: Intensitätsprofil eines Lichtbündels auf einer Streuscheibe;

Fig. 3: Schematische Darstellung des wahrnehmbaren Durchmessers des Lichtbündels bei erhöhter Schwelle;

Fig. 4: Modellhafte Darstellung der Augenphysiologie aufgrund der bei Fig. 2 und Fig. 3 gewonnenen Erkenntnisse.

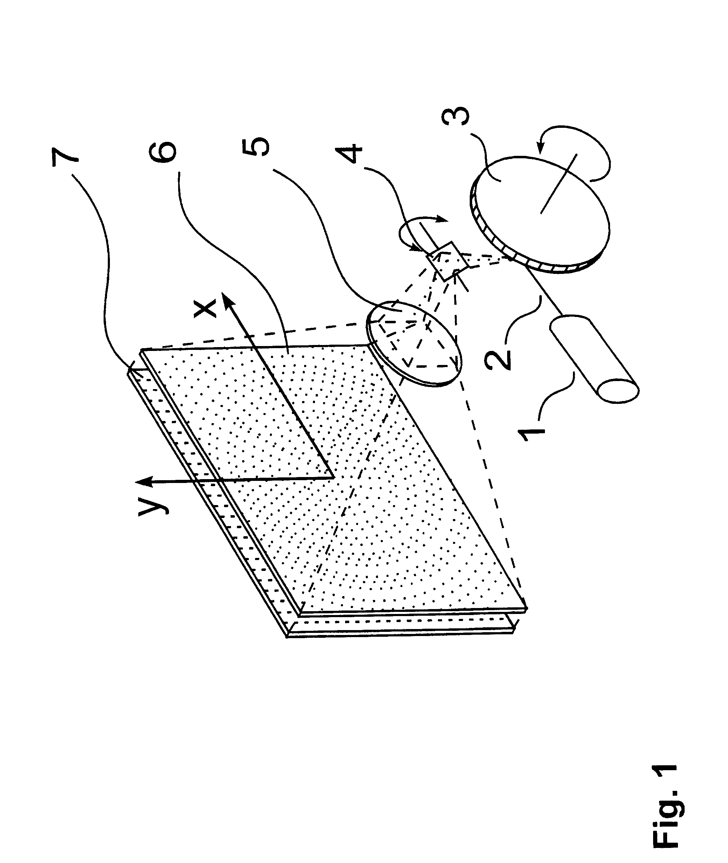

In Fig. 1 ist ein Videogerät gezeigt, wie es aus dem gattungsgemäßen Stand der Technik bekannt ist, das jedoch erfindungsgemäß ausgestaltet wurde.

Zur Helligkeitsmodulation ist eine modulierte Lichtquelle 1 vorgesehen, aus der ein intensitätsmäßig moduliertes Lichtbündel 2 austritt. Dieses Lichtbündel fällt auf einen Polygonspiegel 3 und einen Schwenkspiegel 4.

Der Polygonspiegel 3 und der Schwenkspiegel 4 bilden zusammen eine Rastereinrichtung, die das Lichtbündel gemäß einer Videonorm bezüglich Bild- und Zeilenfrequenz gleichmäßig rastert. Im Vergleich zur bekannten Braunschen Röhre in der Fernsehtechnik entspricht das Lichtbündel 2 dem Elektronenstrahl und der Polygonspiegel 3 sowie der Schwenkspiegel 4 den Magnetspulen zur Ablenkung des Elektronenstrahls. Die Modulation des Lichtbündels 2, die Ablenkung sowie die Synchronisation erfolgen in analoger Weise zur Fernsehtechnik mit Bildröhren, so daß sich hier weitere Erläuterungen erübrigen.

Nach rasterndem Ablenken mittels Polygonspiegel 3 und Schwenkspiegel 4 passiert das Lichtbündel 2 ein optisches System 5. Dieses optische System 5 ist zum Vergrößern der erreichbaren Bildgröße ausgelegt. Weiter wird mit diesem der Fokus des Lichtbündels 2 verkleinert. Beim Ausführungsbeispiel wurde ein optisches System 5 eingesetzt, wie es beispielsweise aus der DE 43 24 849 C2 bekannt ist. Dies ist im wesentlichen ein afokales Linsensystem, welches bei Vergrößerung des Winkels bekanntermaßen gleichzeitig eine Verringerung des Fokus herbeiführt.

Anschließend fällt das Lichtbündel 2 auf eine Fresnellinse 6, mit der das Lichtbündel parallelisiert wird und die sicherstellt, daß unabhängig vom Ort des jeweils dargestellten Bildpunktes das Lichtbündel 2 den gleichen Winkel zum nachfolgenden Schirm 7 einnimmt. Aufgrund der Fresnellinse 6 wird eine gleichmäßige Beleuchtungsdichte über dem gesamten gerasterten Schirm 7 sichergestellt.

Der Schirm 7 ist als Streuscheibe ausgeführt. Mit Hilfe der Streuscheibe wird das Licht in einen durch deren Charakteristik vorgegebenen Raumwinkelbereich gestreut, damit unabhängig vom Winkel, den der Betrachter zum Schirm einnimmt, das mittels dieser Vorrichtung erzeugte Videobild erfaßbar ist.

Beim Ausführungsbeispiel wurde gemäß PAL-Norm gerastert, so daß jeder Bildpunkt nur innerhalb eines Zeitintervalls kleiner als 1 μs beleuchtet wird. Dabei stellte sich unerwarteterweise heraus, daß das vom Schirm 7 ausgehende Lichtbündel wesentlich weiter ausgedehnt sein durfte als für die Videonorm definierte Bildpunktgröße gefordert ist. Nimmt man für das Lichtbündel 2 ein Gaußsches Strahlprofil an und definiert die Strahlbreite durch die Flanken des $1/e^2$ Abfalls vom Maximum, so zeigte sich, daß diese Breite sogar das Vierfache des Bilddurchmessers betragen konnte, ohne daß ein Abnehmen der Bildschärfe beobachtbar war. Diese Eigenschaft stellt sich als besonders vorteilhaft heraus, da deswegen das optische System 5 oder die Lichtquelle 1 wesentlich weniger aufwendig ausgeführt werden können, wobei trotzdem die gewünschte Bildpunktgröße erreicht wird. Hält man jedoch die Rastereinrichtung an, so daß ein statischer Lichtpunkt auf dem Schirm 7 abgebildet wird, beobachtet man eine erhöhte Bildpunktgröße, wie auch aufgrund der Auslegung des optischen Systems 5 und der Lichtquelle 1 statisch erwartet wird.

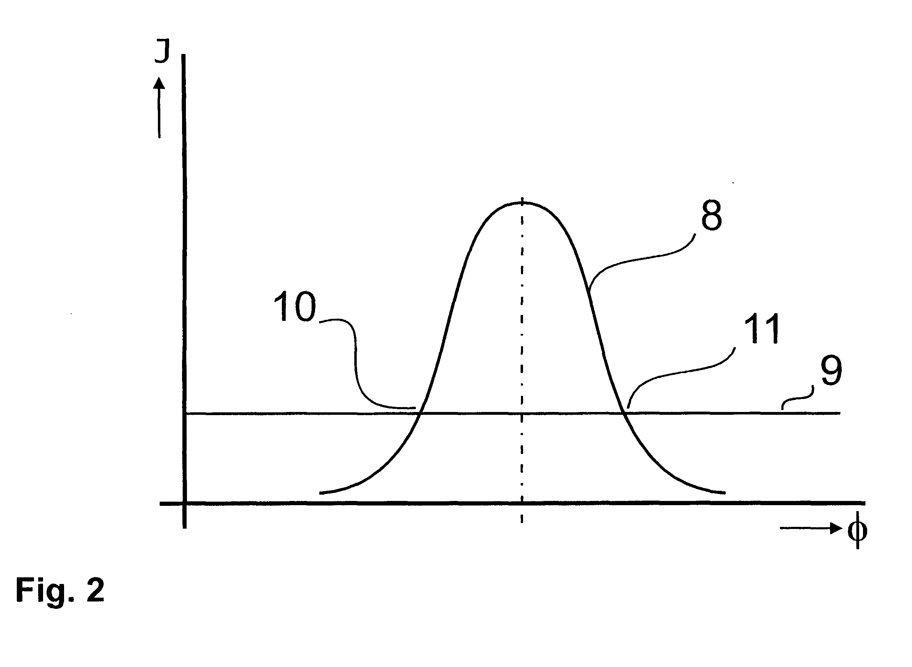

Der wesentlich kleinere beobachtete Strahldurchmesser ist auf die Physiologie des Auges zurückzuführen. Dazu trägt die kurzzeitige Belichtung einzelner Sehzellen statt der gleichmäßigen Belichtung, die bei der üblichen Betrachtung eines Bildes einen Reiz liefert, bei, so daß die Bildpunktgröße wesentlich kleiner als die Breite des Lichtbündels 2 erscheint. Der hier eingesetzte Effekt wird durch folgende Beobachtungen, die anhand der Fig. 2 bis 4 erläutert werden, erklärbar.

In Fig. 2 ist der Intensitätsverlauf 8 eines Lichtbündels in einem Meridionalschnitt dargestellt. Auf der Abszisse ist der Abstand Φ vom Punkt maximaler Intensität eingezeichnet, die Ordinate bezeichnet die jeweilige Intensität J des Intensitätsverlaufs 8.

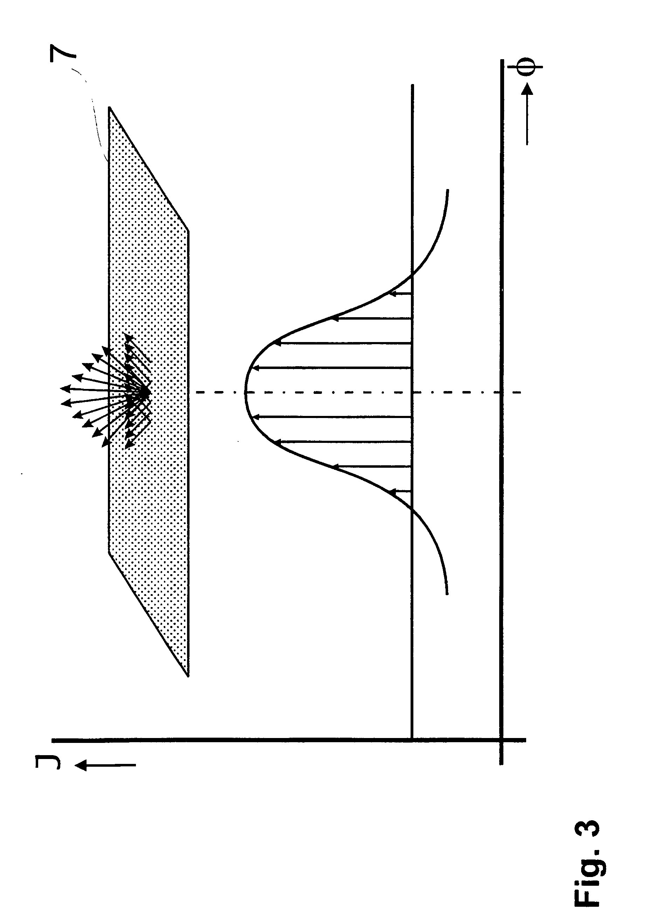

Nach Durchtritt des Lichtbündels 2 durch den als Streuscheibe ausgeführten Schirm 7 tritt das gestreute Laserlicht in den Halbraum vor der Streuscheibe. Dies ist in Fig. 3 schematisch dargestellt. Durch die streuende Struktur des Schirms 7, der mikroskopisch kleine Streupartikel enthält, bildet sich eine Vielzahl von Streuzentren aus. Jedes Streuzentrum sendet dabei als eigenständige Punktlichtquelle gestreutes Laserlicht aus. So ergeben sich über das Intensitätsprofil des Laserstrahles Streuzentren, die mit unterschiedlicher Intensität Licht emittieren.

An den Rändern des Profils des Lichtbündels erreicht der Intensitätsverlauf 8 kleinere Werte. Da die Streuscheibe außer der Eigenschaft zur Streuung zum Zwecke der Kontrasterhöhung schwarz eingefärbt ist, wird ein bestimmter Teil Licht absorbiert. Dadurch tritt eine Begrenzung des sichtbaren Laserprofils im Durchmesser ein.

In der Fig. 2 ist das begrenzende Absorptionsniveau als Gerade 9 parallel zur Φ-Achse dargestellt. Die Schnittpunkte 10 und 11 der Geraden 9 mit dem Intensitätsverlauf 8 bestimmen dann die erfaßbare Intensität aufgrund der Absorption der Streuscheibe. Der Abstand zwischen den Schnittpunkten 10 und 11 repräsentiert den Durchmesser des Laserstrahls, der mittels der Streuzentren im Schirm 7 abgebildet wird. Diese Zusammenhänge gelten objektiv ohne Bewertung des menschlichen Gesichtssinns sowie im statischen Fall.

Wie man der Fig. 2 jedoch beispielsweise entnehmen kann, würden die beiden, den Durchmesser des Lichtbündels bestimmenden Punkte 11 und 12 näher zusammenrücken, wenn die Gerade 9 bei höherer Intensität läge.

Das menschliche Auge ist üblicherweise in der Lage, Dynamikbereiche in der Größenordnung von $10^4$ zu erfassen. Das liegt einmal an der nicht-linearen Empfindlichkeit der Sehzellen, zum anderen aber auch an der Möglichkeit der Adaptionsfähigkeit durch Änderung der Pupillengröße. Aufgrund der Trägheit des Auges mit einer Zeitkonstanten von ungefähr 1/30 s wird sich bei der Videoprojektion eine Pupillengröße einstellen, die auch gegeben wäre, wenn die gesamte Lichtintensität innerhalb dieses die Trägheit bestimmenden Zeitintervalls auf der Sehzelle eintreffen würde. Tatsächlich ist aber die Intensität in jedem Bildpunkt aufgrund der geringeren Belichtungszeit momentan ungefähr $10^5$ mal größer (Bildpunktfrequenz größer als einige Megahertz). Das Auge des Beobachters ist für diese hohen Intensitäten also nicht richtig angepaßt. Das heißt, die Sehschwelle, bei der das Auge noch die richtigen Intensitäten erfaßt, ist gegenüber dem natürlichen Sehen, wie es beispielsweise im statischen Fall vorliegt, nicht im optimalen Bereich. Die Beobachtung beim Ausführungsbeispiel von Fig. 1, daß ein wesentlich kleinerer Strahldurchmesser im Auge empfunden wird als der wirkliche Durchmesser des Lichtbündels 2, weist deutlich darauf hin, daß die durch die Fehlanpassung bestimmte Schwelle wesentlich höher als beim normalen Sehen liegt.

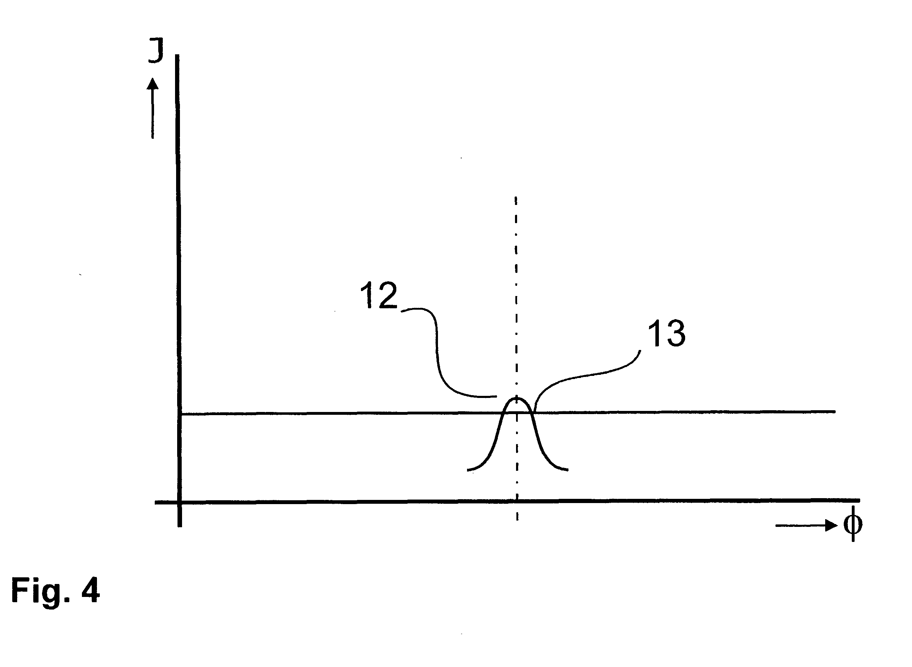

Dies ist in Fig. 4 veranschaulicht. Diese zeigt wieder eine Gauß-Kurve im J-Φ-Diagramm. Die eingezeichnete Gerade liegt dort in der Nähe des Maximums der eingezeichneten Gauß-Kurve, so daß die Breite zwischen den Punkten 12 und 13 wesentlich geringer als in dem durch die Fig. 2 gegebenen statischen Fall erscheint.

Das Beispiel von Fig. 4 trägt natürlich dem nicht-linearen Charakter physiologischer Phänomene keine Rechnung. Aus eigener Erfahrung ist jedem bekannt, daß man sowohl in großer Dunkelheit als auch bei hellstem Sonnenlicht gut sehen kann, also hohe Dynamikbereiche mit den Augen erfaßbar sind und selbst kleine Helligkeitsunterschiede bei grellem Licht erkannt werden können.

Ein ähnliches Verhalten ist auch vom menschlichen Ohr bekannt. Technisch wird dieses Verhalten bei der Lautstärke berücksichtigt, indem für diese ein logarithmischer Maßstab (Angaben in dB) gewählt wird.

Analog würde man für den Reiz eines Sehnervs ebenfalls ein logarithmisches Verhalten ansetzen. Ein logarithmisches Reizverhalten ist auch sinnvoll, damit die Nervenbahnen überhaupt hohe Dynamiken bis

$10^6$ übertragen können.

Zur Erklärung des beobachteten Phänomens kann man also für den Nervenreiz R ansetzen:

$$R = F^* \ln \frac{I}{I_0}$$

Dabei bedeutet I die Lichtintensität, $I_0$ die Schwelle der den jeweiligen Lichtbedingungen angepaßten Sehzelle, F einen Faktor, der unter anderem durch die Pupille zur optimalen Aussteuerung des Reizes R eingestellt wird.

Andererseits werden auch Kontraste gut wahrgenommen, die bei einem Logarithmus stark gedämpft werden. Das heißt, eine Funktion für die Wahrnehmung sollte die dargestellte Reizfunktion zumindest umkehren oder sogar den Kontrast erhöhen. Deshalb muß für die Wahrnehmung W entsprechend ein Exponentialverhalten angesetzt werden:

$$W = ke^R$$

Triviale Größen, die möglicherweise in die Wahrnehmung W eingehen und die bei den folgenden Betrachtungen keine Bedeutung haben, werden für dieses vereinfachte Modell weggelassen. Allerdings wurde auch ein Faktor k eingefügt, damit die Wahrnehmung W immer richtig auf den Reiz R normiert werden kann.

Im statischen Fall, in dem die Wahrnehmungsfunktion die wirkliche Intensität bzw. den wirklichen Intensitätsverlauf wiedergibt, muß ein funktioneller Zusammenhang zwischen k, F und $I_0$ angenommen werden. Insbesondere wird bei langsamen Änderungen von I für jeden beliebigen Verlauf I unabhängig vom Ort anzusetzen sein, was bedeutet:

$$k = I_0 \text{ und } F = 1$$

damit immer die richtige Intensität wahrgenommen wird.

Ein Zusammenhang zwischen den Größen f, k und $I_0$ wird ferner ähnlich auch im dynamischen Fall anzunehmen sein. Sehr schnelle zeitliche Änderungen von I werden zwar nicht mehr wahrnehmbar sein, jedoch wird die Intensität durch die Trägheit des Auges zeitlich gemittelt. Die Intensität ist dann durch eine Augenadaption gegeben, bei der der Mittelwert gleich der richtig wahrzunehmenden Intensität ist. Man erwartet deshalb einen funktionellen Zusammenhang zwischen f, k und $I_0$, bei dem das zeitliche Integral über I gleich dem zeitlichen Integral über W ist, wobei der Integrationsbereich in der Größenordnung der Zeitkonstanten für die Augenträgheit zu wählen ist.

Im folgenden wird nun anhand der obigen Gleichungen bestimmt, wie ein Gaußsches Profil, das die Intensitätsverteilung im Lichtbündel beschreibt, wahrgenommen wird. Das Strahlprofil wird entsprechend beschrieben als:

$$I = e^{-x^2/2\sigma^2}$$

Dabei ist x der Abstand zum Mittelpunkt und $\sigma$ die Varianz. Üblicherweise gibt man für derartige Strahlprofile eine Breite an, indem man diejenigen x bestimmt, bei denen die Intensität vom Maximum auf $e^{-2}$ abfällt. Das heißt, in diesem Fall ist dann das so definierte $x = 2\sigma$. Die oben näher definierte Breite entspricht also dem Vierfachen der Varianz.

Bei Einsetzen dieser Intensitätsverteilung in die oben aufgestellten Gleichungen für den Reiz und für die Wahrnehmung erhält man die Beziehung:

$$W = ke^{-Fx^2/2\sigma^2} / I_0{}^F$$

Wie man durch Vergleich mit dem Strahlprofil von I erkennt, wird also die Lichtintensität mit einer Varianz $\sigma / \sqrt{F}$ wahrgenommen. Im statischen Fall, in dem sich für F = 1 ergab, wird also wie erwartet das Strahlprofil naturgetreu gesehen. Wie allerdings vorstehend ausgeführt wurde, ist F unter anderem durch die Pupillengröße bestimmt, so daß durch die erwartete beschriebene Fehlanpassung F $\neq$ 1 erwartet wird.

In einem Zeitintervall von Mikrosekunden ist die Pupille im wesentlichen weiter als beim statischen Sehen offen. Übliche Zeitkonstanten zur Änderung der Pupillengröße liegen in der Größenordnung von mehreren Sekunden, so daß im dynamischen Fall der Wert von F gegenüber dem statischen Fall überhöht ist, das heißt, das wahrgenommene Strahlprofil ist wesentlich schmaler als das des kurzzeitig auf die Sehzellen auftreffenden Lichtbündels.

Für F läßt sich auch eine einfache Abschätzung angeben. Da die Sehzellen innerhalb von Zeitkonstanten im Bereich kleiner als 1 $\mu$s beleuchtet werden und die Augenträgheit im Bereich 1/30 s liegt, ist die Reizung gegenüber üblichen, statischen Reizungen der Sehzelle mehr als $10^5$ mal größer. Andererseits können Sehzellen einen Dynamikbereich von $10^4$ erfassen. Bei der Abschätzung kann man also davon ausgehen, daß das Auge üblicherweise in der Mitte dieses zulässigen Dynamikbereiches ($10^2$) adaptiert ist, so daß man für I/$I_0$ von einer Überhöhung von $10^7$ ausgehen kann. Das heißt, der Faktor F ist um einen Faktor In (I/$I_0$) zu groß. Man erhält dann für F ungefähr 16, das heißt, die wahrgenommene Breite der Gaußfunktion, die wie vorstehend dargestellt, um $\sqrt{F}$ verkleinert erscheint, ist um einen Faktor 4 schmaler als das projizierte Lichtbündel.

Diese einfache Abschätzung zu dem auch experimentell bestätigten Ergebnis ist ein Beweis für die Interpretation, daß hier ein physiologischer Effekt zur Wirkung kommt. Daß trotz der recht groben Abschätzung ähnliche Werte wie beobachtet bei der Berechnung gewonnen werden, ist wohl darauf zurückzuführen, daß in diese Betrachtung vor allen Dingen der Logarithmus eingeht, also kleine Fehlschätzungen nur wenig zu Buche schlagen.

Allerdings sind nach Wissen des Anmelders keine Messungen bekannt, die ein logarithmisches Verhalten zwischen Reiz und Lichtintensität sogar bei Größen von $10^7$ zeigen. Deswegen muß das oben genannte Modell als vereinfacht und in den wesentlichen Details noch als verbesserungsfähig angesehen werden.

Wie jedoch aus den obigen Betrachtungen deutlich wurde, ist zum Erreichen des physiologischen Effektes wesentlich, daß die momentane Intensität möglichst hoch ist. Diesen Effekt kann man steigern, indem man möglichst kurzzeitig sehr hohe Intensitäten auf die Sehzelle bringt. Deswegen bietet sich zur Steigerung des Effekts vor allen Dingen auch der Einsatz eines gepulsten Lasers an. Wie deutlich wurde, ist im Bereich von 1 $\mu$s bis 10 ps Pulszeiten ein Faktor größer als vier zu erwarten. Bei kleineren Pulsdauern von sogar unter 1 ps sollte man nach den obigen Modellrechnungen eine noch wesentlich geringere wahrgenommene Strahlbreite gegenüber der Breite des Lichtbündels 2 zur Verbesserung einsetzen können. Aufgrund dieser Überlegungen und möglicherweise ferner aufgrund von Abweichungen im logarithmischen Verhalten der Reizfunktion können dann Abbildungsbedingungen gewählt werden, bei denen Strahldurchmesser bis zur zehnfachen der darzustellenden Bildpunktgröße eingesetzt werden. Für normale Bedingungen, wie beispielsweise durch Einhaltung einer Norm mit Bildpunktzeiten über 100 ps, wird sich allerdings nur ein Strahldurchmesser im Bereich zwischen dem Ein- und Fünffachen verwirklichen lassen. Dies wird durch das experimentelle Ergebnis von 4 bestätigt. Da andererseits auch die Definition des Strahlprofils nur näherungsweise bestimmt ist und eine Abweichung der Bildpunktgröße von 20% bezüglich der Bildpunktgröße qualitätsmäßig tolerierbar ist, läßt sich die Erfindung vor allem im Bereich des Verhältnisses der Breite des Strahlprofils zum Zeilenabstand im Bereich 4 $\pm$ 1 verwirklichen.

Die geeigneten Grenzen lassen sich vom Fachmann leicht durch Versuche bei den jeweils gegebenen Belichtungszeiten für den einzelnen Bildpunkt ermitteln.

**Patentansprüche**

1. Videoprojektionsgerät zum Darstellen eines aus Bildpunkten durch Bildgröße und Videonorm definierter Größe aufgebauten Videobildes auf einem Schirm (7) mit mindestens einer Lichtquelle (1) zum Aussenden eines Lichtbündels (2) mit vorgegebenem Strahlprofil zur Beleuchtung von jedem Bildpunkt auf dem Schirm während eines durch die Videonorm vorgegebenen Zeitintervalls, **dadurch gekennzeichnet,**

**daß** das Strahlprofil des Lichtbündels (2) weiter als die definierte Größe des jeweiligen zu beleuchtenden Bildpunkts ausgedehnt und das Zeitintervall so kurz gehalten ist, daß die Größe eines Bildpunktes im Auge von einem das Videobild betrachtenden Beobachters erfaßten Bildpunktes übereinstimmend mit der durch Bildgröße und Videonorm definierten Größe des Bildpunktes wahrnehmbar ist.

2. Videoprojektionsgerät nach Anspruch 1, **dadurch gekennzeichnet,**
   **daß** eine Rastereinrichtung (3, 4) zum zeilen - und bildmäßigen Rastern des Lichtbündels (2) vorgesehen ist, mit der beim Rastern ein durch Bildgröße und Videonorm definierter Zeilenabstand eingehalten wird.

3. Videoprojektionsgerät nach Anspruch 2, **dadurch gekennzeichnet,**
   **daß** dem Strahlprofil eine in senkrechter Richtung zum zeilenmäßigen Rastern über einen $1/e^2$ Intensitätsabfall vom Maximum definierte Breite zugeordnet ist, die zwischen dem Ein-und Zehnfachen des durch Bildgröße und Videonorm definierten Zeilenabstands beträgt.

4. Videoprojektionsgerät nach Anspruch 3, **dadurch gekennzeichnet,**
   **daß** die Breite des Strahlprofils zwischen dem Ein- und Fünffachen des Zeilenabstands beträgt.

5. Videoprojektionsgerät nach Anspruch 4, **dadurch gekennzeichnet,**
   **daß** das Verhältnis der Breite des Strahlprofils zum Zeilenabstand 4±1 beträgt.

6. Videoprojektionsgerät nach einem der Ansprüche 1 bis 5, **dadurch gekennzeichnet,**
   **daß** die Lichtquelle (1) gepulst und insbesondere ein gepulster Laser ist.

7. Videoprojektionsgerät nach Anspruch 6, **dadurch gekennzeichnet, daß** die Pulsdauer kleiner als 1 μs und insbesondere kleiner als 10 ps ist.

8. Videoprojektionsgerät nach Anspruch 7, **dadurch gekennzeichnet,**
   **daß** die Pulsdauer kleiner als 1 ps ist.

9. Verfahren, bei dem ein Videobild auf einem Schirm (7) aus Bildpunkten durch Bildgröße und Videonorm definierter Größe aufgebaut wird, indem ein Lichtbündel (2) mit vorgegebenem Strahlprofil zur jeweiligen Beleuchtung der Bildpunkte während eines durch die Videonorm vorgegebenen Zeitintervalls auf den Schirm (7) gerichtet wird, **dadurch gekennzeichnet,**
   **daß** bei dem Verfahren ein Lichtbündel (2) mit einem Strahlprofil eingesetzt wird, das weiter als die durch die definierte Größe des jeweils zu beleuchtenden Bildpunktes ausgedehnt ist, und jeder Bildpunkt innerhalb eines so kurzen Zeitintervalls beleuchtet wird, daß die Größe des Bildpunktes im Auge von einem das Videobild betrachtenden Beobachter erfaßten Bildpunktes übereinstimmend mit der durch Bildgröße und Videonorm definierten Größe dieses Bildpunktes wahrgenommen wird.

10. Verfahren nach Anspruch 9, **dadurch gekennzeichnet, daß** das Lichtbündel (2) zur Darstellung des Videobildes gerastert wird.

11. Verfahren nach Anspruch 9 oder 10, **dadurch gekennzeichnet, daß** das Lichtbündel (2) beim Beleuchten eines jeden Bildpunktes gepulst wird.

## Claims

1. Video projector for displaying on a screen (7) a video image made up of pixels of a size defined by image size and standard video specifications, with at least one light source (1) for emitting a light beam (2) with predetermined beam profile for illuminating each pixel on the screen for a time interval predetermined by standard video specifications, **characterised in that** the beam profile of the light beam (2) is expanded beyond the defined size of the respective pixel to be illuminated and the time interval is kept so short that the size of a pixel detected by the eye of an observer watching the video image can be perceived to correspond to the size of the pixel defined by image size and standard video specifications.

2. Video projector according to claim 1, **characterised in that** a raster device (3, 4) is provided for the line- and image-wise rastering of the light beam (2), with which a line spacing defined by image size and standard video specifications is adhered to during rastering.

3. Video projector according to claim 2, **characterised in that** the beam profile is allocated a width which is defined in the vertical direction for line-wise rastering via a $1/e^2$ intensity reduction from the maximum and is between one and ten times the line spacing defined by image size and standard video specifications.

4. Video projector according to claim 3, **characterised in that** the width of the beam profile is between one and five times the line spacing.

5. Video projector according to claim 4, **characterised in that** the ratio of the width of the beam profile to the line spacing is 4 ± 1.

6. Video projector according to any one of claims 1 to 5, **characterised in that** the light source (1) is pulsed and is, in particular, a pulsed laser.

7. Video projector according to claim 6, **characterised in that** the pulse duration is less than 1 μs and, in particular, less than 10 ps.

8. Video projector according to claim 7, **characterised in that** the pulse duration is less than 1 ps.

9. Process in which a video image on a screen (7) is made up of pixels of a size defined by image size and standard video specifications, in that a light beam (2) with predetermined beam profile is directed onto the screen (7) for the respective illumination of the pixels for a time interval predetermined by standard video specifications, **characterised in that**, in the process, the light beam (2) used has a beam profile which is expanded beyond the defined size of the respective pixel to be illuminated and each pixel is illuminated within a time interval which is so short that the size of the pixel detected by the eye of an observer watching the video image is perceived to correspond to the size of this pixel defined by image size and standard video specifications.

10. Process according to claim 9, **characterised in that** the light beam (2) is rastered for displaying the video image.

11. Process according to claim 9 or 10, **characterised in that** the light beam (2) is pulsed during illumination of each pixel.

**Revendications**

1. Appareil de projection vidéo pour représenter sur un écran (7) une image vidéo constituée de points d'image de format défini par le format d'image et la norme vidéo, comportant au moins une source lumineuse (1) pour émettre un faisceau lumineux (2) avec profil de faisceau donné pour éclairer chaque point d'image sur écran, pendant un intervalle de temps donné par la norme vidéo, **caractérisé en ce que** le profil du faisceau lumineux (2) est plus étendu que le format défini de chaque point d'image à éclairer, et l'intervalle de temps est maintenu si court que les dimensions d'un point d'image, enregistré par l'oeil d'un observateur regardant l'image vidéo, peuvent être perçues comme coïncidant avec les dimensions du point d'image, définies par le format d'image et la norme vidéo.

2. Appareil de projection vidéo selon la revendication 1, **caractérisé en ce qu'**il est prévu un dispositif de balayage (3, 4) pour le balayage ligne par ligne et image par image du faisceau lumineux (2), au moyen duquel une distance entre les lignes, définie par le format d'image et la norme vidéo, est respectée pendant le balayage.

3. Appareil de projection vidéo selon la revendication 2, **caractérisé en ce qu'**il est affecté au profil de faisceau une largeur dans la direction verticale, pour le balayage ligne par ligne, définie en fonction d'une chute d'intensité de $1/e^2$ à partir du maximum et qui est comprise entre une fois et dix fois la distance entre les lignes, définie par le format d'image et la norme vidéo.

4. Appareil de projection vidéo selon la revendication 3, **caractérisé en ce que** la largeur du profil de faisceau est comprise entre une fois et cinq fois la distance entre les lignes.

5. Appareil de projection vidéo selon la revendication 4, **caractérisé en ce que** le rapport de la largeur du profil de faisceau à la distance entre les lignes est de 4 ± 1.

6. Appareil de projection vidéo selon l'une des revendications 1 à 5, **caractérisé en ce que** la source lumineuse (1) est pulsée et est en particulier un laser pulsé.

7. Appareil de projection vidéo selon la revendication 6, **caractérisé en ce que** la durée d'impulsion est inférieure à 1 μs et en particulier inférieure à 10 ps.

8. Appareil de projection vidéo selon la revendication 7, **caractérisé en ce que** la durée d'impulsion est inférieure à 1 ps.

9. Procédé dans lequel une image vidéo sur un écran (7) est constituée de points d'image de dimensions définies par le format d'image et la norme vidéo, en ce qu'un faisceau lumineux (2) avec profil de faisceau donné est dirigé sur l'écran pour l'éclairage respectif des points d'image, pendant un intervalle de temps donné par la norme vidéo, **caractérisé en ce que** pour le procédé, on utilise un faisceau lumineux (2) avec un profil de faisceau qui est plus étendu que les dimensions définies du point d'image à éclairer, et chaque point d'image est éclairé à l'intérieur d'un intervalle de temps si court que les dimensions du point d'image enregistré par l'oeil d'un observateur regardant l'image vidéo, sont perçues comme coïncidant avec les dimensions, définies par le format d'image et la norme vidéo, de ce point d'image.

10. Procédé selon la revendication 9, **caractérisé en**

**ce que** le faisceau lumineux (2) est balayé pour la représentation de l'image vidéo.

11. Procédé selon la revendication 9 ou 10, **caractérisé en ce que** le faisceau lumineux (2) est pulsé pour l'éclairage de chaque point d'image.

Fig. 1

**Fig. 2**

EP 0 867 087 B1

**Fig. 3**

EP 0 867 087 B1

**Fig. 4**

EP 0 867 087 B1